# EUROPÄISCHE PATENTSCHRIFT

(11) **EP 2 645 021 B1**
(45) Veröffentlichungstag und Bekanntmachung des Hinweises auf die Patenterteilung: **24.08.2016**
(21) Anmeldenummer: 13161100.6
(22) Anmeldetag: 26.03.2013
(51) Int. Cl.: F25C 1/04, F25C 5/14, F25C 1/22

(54) **Verfahren zum Herstellen von Eiskugeln**
Method for producing ice balls
Procédé de fabrication de boules de glace

(30) Priorität: 30.03.2012 AT 501132012
(43) Veröffentlichungstag der Anmeldung: 02.10.2013
(73) Patentinhaber: IBS - Institut für Brandschutztechnik und Sicherheitsforschung Gesellschaft m.b.H., 4020 Linz (AT)
(72) Erfinder: Zierler, Reinhard, 4563 Micheldorf (AT)
(74) Vertreter: Patentanwaltskanzlei Hübscher

(56) Entgegenhaltungen:
- DE-A1- 3 914 655
- GB-A- 2 447 902
- JP-A- H01 310 277
- US-A1- 2004 206 250

## Beschreibung

Die Erfindung bezieht sich auf ein Verfahren und eine Vorrichtung zum Herstellen von Eiskugeln, wobei zunächst Wasser von unten nach oben zu einem Eisblock gefroren und dann der Eisblock in Würfel zersägt wird, bevor die Würfel in einem erwärmten Formwerkzeug mit halbkugeligen Formräumen einer Unter- und einer Oberform während des Schließens der Unter- und Oberformen zu einer Kugel geschmolzen werden.

Um die Widerstandfähigkeit von Baumaterialien, beispielsweise Dachziegeln, gegenüber Hagelschlag zu überprüfen, werden diese Baumaterialien unter vorgegebenen Bedingungen mit Eiskugeln beschossen, wobei es zur Sicherstellung vergleichbarer Prüfungsergebnisse entscheidend darauf ankommt, dass die Eiskugeln selbst bestimmten Anforderungen entsprechen. Abgesehen von der Genauigkeit der Kugelform ist es entscheidend, dass die Festigkeit der Eiskugeln nicht durch Luftporen oder Risse beeinträchtigt wird. Das Herstellen von riss- und porenfreien Eiskugeln mit einer für das Verschießen ausreichenden Fertigungstoleranz ist jedoch schwierig.

Zum Herstellen von dekorativen Formteilen aus Eis ist es bekannt, zunächst Wasser zu einem Eisblock zu frieren, um dann den Eisblock zwischen einer Unter- und einer Oberform zu schmelzen, die sich zur Negativform des Formteils ergänzende Formräume bilden. Die Unter- und Oberform werden zu diesem Zweck entsprechend erwärmt und unter Zwischenlage des Eisblocks geschlossen, wobei im Zuge des Schließens solcher Formwerkzeuge die über die Formräume vorstehenden Teile des Eisblocks abgeschmolzen werden, sodass mit dem Schließen des Formwerkzeugs der zum Formteil geschmolzene Eisblock gerade die Formräume der Ober- und Unterform ausfüllt. Mit Hilfe solcher Vorrichtungen wurde bereits vorgeschlagen, Eiskugeln zu formen (US 2012/0007264 A1), indem die Unter- und Oberform je einen halbkugeligen Hohlraum bilden. Um für eine gleichmäßigere Temperaturdifferenz beim Erschmelzen der Eiskugeln so sorgen, können die Unter- und Oberformen Strömungskanäle für Warmwasser aufweisen, damit diese Formen zwischen zwei Vorgängen zum Erschmelzen von Eiskugeln auf eine vorgegebene Ausgangstemperatur erwärmt werden können. Diese Maßnahme ist allerdings nicht geeignet, Eiskugeln zu schmelzen, die den für den vorgesehenen Einsatzzweck hohen Anforderungen hinsichtlich der Rissfreiheit und der Formgenauigkeit genügen.

Der Erfindung liegt somit die Aufgabe zugrunde, ein Verfahren sowie eine Vorrichtung zum Herstellen von Eiskugeln anzugeben, mit dessen Hilfe poren- und rissfreie Eiskugeln einer vorgegebenen Größe mit einer für das nachträgliche Schießen ausreichenden Fertigungstoleranz sichergestellt werden können.

Ausgehend von einem Verfahren sowie einer Vorrichtung der eingangs geschilderten Art löst die Erfindung die gestellte Aufgabe dadurch, dass die Unter- und die Oberform während des Schließens gleichförmig erwärmt werden und dass die erschmolzene Eiskugel dem Formwerkzeug unmittelbar nach dem Schließen der Unter- und der Oberform entnommen und vom restlichen Schmelzwasserfilm befreit wird.

Der Erfindung liegt die Erkenntnis zugrunde, dass nur dann rissfreie Eiskugeln erschmolzen werden können, wenn ausgehend von porenfreien Eiswürfeln eine weitgehend gleichmäßige Wärmeintragung in die Eiswürfeln über die Unterund Oberformen erreicht werden kann. Dies gelingt dann, wenn das Formwerkzeug nicht nur wie üblich auf eine vorgegebene Ausgangstemperatur aufgewärmt, sondern auch während des Schmelzvorgangs gleichförmig erwärmt wird und daher die sonst aufgrund der sich während des Schließens von Unterund Oberform ändernden Schmelzbereiche auftretenden Temperaturunterschiede ausgeglichen werden. Dazu kommt, dass ein Nachschmelzen in der geschlossenen Form verhindert werden muss, um Formgenauigkeit und Maßhaltigkeit der erschmolzenen Eiskugeln gewährleisten zu können. Die erschmolzenen Eiskugeln müssen daher unmittelbar nach dem Schließen des Formwerkzeugs entformt werden. Da die auf diese Art erschmolzenen Eiskugeln mit einem Schmelzwasserfilm überzogen sind, besteht die Gefahr, dass dieser Schmelzwasserfilm vor dem Anfrieren schwerkraftbedingt entlang der Eiskugel fließt und folglich zu Form- und Maßfehlern führt. Diese Gefahr wird dadurch unterbunden, dass die Eiskugel nach der Entnahme aus dem Formwerkzeug vom restlichen Schmelzwasserfilm befreit wird, beispielsweise durch ein Abtrocknen mit einem feuchtigkeitssaugenden Tuch.

Das Sägen eines Eisblocks zu Würfeln bedingt einen Wärmeeintrag im Bereich der Schnittflächen, was zu einer ungleichmäßigen Termperaturverteilung über den Querschnitt der Würfel führt. Um für einen zum anschließenden rissfreien Erschmelzen der Eiskugeln ausreichenden Temperaturausgleich zu sorgen, werden die Würfel nach dem Sägen zum Ausgleich von Temperaturunterschieden während einer vorgegebenen Zeitspanne gekühlt.

Um Risse in oberflächennahen Schichten eines Eiskörpers zu vermeiden, sind hohe Temperaturunterschiede zwischen der Oberfläche des Eiskörpers und seiner Umgebung zu vermeiden. Aus diesem Grunde empfiehl es sich auch, die Würfel vor dem Formschmelzen an der Oberfläche in einer wärmegedämmten Umgebung bei Raumtemperatur anzutauen. Die wärmegedämmte Umgebung ist dabei wichtig, um den Antauvorgang nur allmählich zuzulassen.

Beim Schließen des Formwerkzeugs kann im Bereich der Trennfläche zwischen der Unter- und der Oberform ein Umfangsgrat auf der Eiskugel auftreten. Zur Vermeidung eines solchen Grates kann die erschmolzene Eiskugel vor ihrer Entnahme aus der Unterform in der Unterform gedreht werden, sodass der allfällige Grat abgetrennt bzw. abgeschmolzen wird.

Zur Durchführung des Verfahrens its von einer Vorrichtung mit einem Formwerkzeug aus einer Unter- und einer Oberform auszugehen, die je einen halbkugeligen Formraum bilden und mit einem Wärmeträger, vorzugsweise Wasser, beaufschlagbare Strömungskanäle aufweisen. Da die Strömungskanäle den jeweiligen Formraum umschließen, kann in einfacher Weise für eine gleichförmige Erwärmung des Formwerkzeugs während des Schließvorgangs gesorgt werden, der ja nur in Abhängigkeit vom Fortschritt des Abschmelzens des Eiswürfels vorgenommen werden kann. Damit die Form- und Maßhaltigkeit der erschmolzenen Eiskugel gewährleistet werden kann, weist das Formwerkzeug außerdem einen auf das Schließen der Ober-und der Unterform ansprechenden Signalgeber auf. Damit sind die konstruktiven Voraussetzungen geschaffen, die Eiskugel unmittelbar nach dem Schließen des Formwerkzeugs entformen zu können.

Sollen Eiskugeln mit unterschiedlichen Durchmessern hergestellt werden, so können die Ober- und Unterformen auswechselbare Einsätze für die halbkugeligen Formräume umfassen. Bei Bedarf können die Einsätze mit den halbkugeligen Formräumen entsprechend gewechselt werden.

Das gleichmäßige Abfließen des Schmelzwassers beim Formschmelzen der Eiskugel unterstützt die form- und maßhaltige Fertigung der Eiskugeln. Zu diesem Zweck weist die Unterform in der Teilungsfläche zur Oberform radiale, vom halbkugeligen Formraum ausgehende Ablaufrinnen für Schmelzwasser auf.

Das unmittelbare Entnehmen der erschmolzenen Eiskugel aus der Unterform des geöffneten Formwerkzeugs kann durch einen radialen Ausstoßer erleichtert werden, der im unteren Scheitelbereich des halbkugeligen Formraums vorgesehen ist und gegen eine Rückstellkraft betätigt werden kann, sodass sichergestellt wird, dass nach einer Betätigung des Ausstoßers und der damit verbundenen Entnahme der erschmolzenen Eiskugel der Ausstoßer in seine Ausgangslage selbständig zurückkehrt und die Unterform für das Erschmelzen einer weiteren Eiskugel freigibt.

Anhand der Zeichnung wird das erfindungsgemäße Verfahren näher erläutert. Es zeigen
Fig. 1 eine erfindungsgemäße Vorrichtung zum Herstellen von Eiskugeln in einem schematischen Axialschnitt,
Fig. 2 einen Schnitt nach der Linie II-II der Fig. 1 und

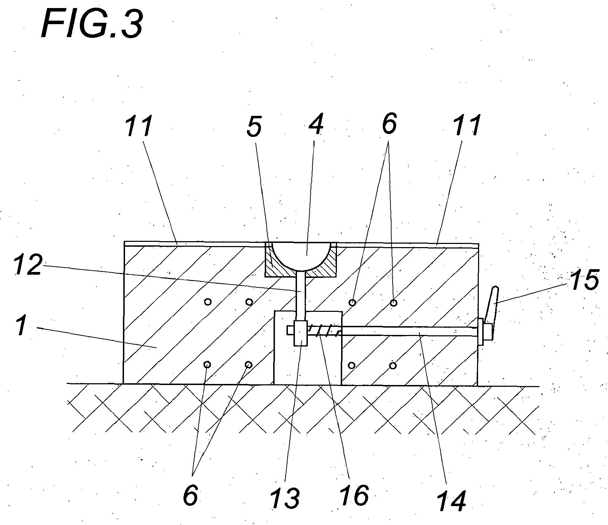

Fig. 3 die Unterform in einem Schnitt nach der Linie III-III der Fig. 1.

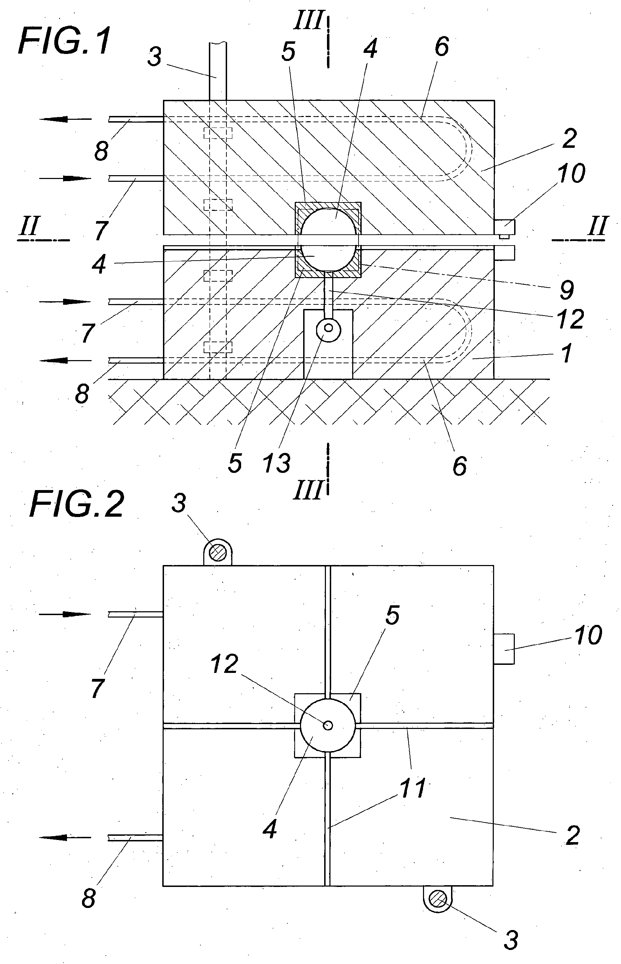

Das dargestellte Formwerkzeug zum Erschmelzen einer Eiskugel weist eine Unterform 1 und eine Oberform 2 auf, die gegenüber der Unterform 1 über Führungen 3 koaxial geführt ist. Die Unter- und die Oberformen 1, 2 sind jeweils mit einem halbkugeligen Formraum 4 versehen, wobei sich die beiden Formräume 4 in geschlossenem Zustand des Formwerkzeugs zu einem Kugelraum ergänzen. Wie insbesondere der Fig. 1 entnommen werden kann, werden die halbkugeligen Formräume 4 durch Einsätze 5 gebildet, die auswechselbar in den Unter- und Oberformen 1, 2 gehalten sind, sodass durch ein Auswechseln der Einsätze 5 Eiskugeln unterschiedlicher Größe erschmolzen werden können.

Die Unter- und Oberformen 1, 2 sind jeweils mit Strömungskanälen 6 versehen, die über einen Vorlauf 7 mit einem Wärmeträger, vorzugsweise Wasser, beaufschlagt werden können. Der Rücklauf ist mit 8 bezeichnet. Die Unter- und Oberformen 1, 2 können somit gleichmäßig erwärmt werden, wobei die Vorlauftemperatur des Wärmeträgers in Abhängigkeit vom Durchmesser der zu erschmelzenden Eiskugel gewählt wird und beispielsweise für eine Eiskugel mit einem Durchmesser von 5 cm ca. 60 °C beträgt. Bei größeren Eiskugeln kann der Wärmeeintrag vergrößert werden. Kleinere Eiskugeln bedürfen allenfalls eines geringeren Wärmeeintrags.

Um eine poren- und rissfreie Eiskugel erschmelzen zu können, wird zunächst entsprechend sauberes Wasser z. B. bei -10 °C in einer oben offenen Wanne zu einem Eisblock gefroren, wobei der Gefriervorgang von unten nach oben unter einer Umwälzströmung des Wassers durchgeführt wird, um Luftporen zu unterbinden. Der erhaltene Eisblock wird mit Hilfe einer Säge in Würfel zerschnitten, deren Kantenlänge größer als die herzustellende Eiskugel ist. Damit die durch das Sägen der Würfel unvermeidlichen Temperaturunterschiede ausgeglichen werden, werden die Würfel beispielsweise bei -15°C über eine Zeitspanne von wenigstens zwölf Stunden in einer Kühlanlage gelagert, bevor die Würfel weiterverarbeitet werden. Der Gefahr von Oberflächenrissen in den aus der Kühlanlage entnommenen Würfeln zufolge der Differenz zwischen der Würfeltemperatur und der Raumtemperatur kann dadurch begegnet werden, dass die Würfel an ihrer Oberfläche bei Raumtemperatur in einer wärmegedämmten Umgebung allmählich angetaut werden.

Sobald der durch die Luftfeuchtigkeit bei der Entnahme der Würfel aus der Kühlanlage auf der Würfeloberfläche kondensierte und angefrorene Feuchtigkeitsfilm angetaut ist, was sich durch ein Klarwerden der angelaufenen Oberfläche der Würfel anzeigt, können die Würfel in das vorgewärmte Formwerkzeug zwischen der Unter- und der Oberform 1, 2 eingelegt werden, wobei der Eiswürfel zunächst im Bereich der Teilungsflächen zwischen der Unter- und der Oberform 1, 2 angeschmolzen wird und im Zuge des fortschreitenden Schmelzvorgangs zunehmend in die Formräume 4 der Unter- und der Oberform 1, 2 eindringt, während sich die Oberform 2 entsprechend auf die Unterform 1 entlang der Führungen 3 absenkt, bis das Formwerkzeug geschlossen ist und die Oberform 2 auf der Unterform 1 zu liegen kommt. In der Fig. 1 ist der Umriss eines Eiswürfels strichpunktiert angedeutet und mit dem Bezugszeichen 9 versehen. Das Schließen des Formwerkzeugs wird durch einen Signalgeber 10, beispielsweise einen elektrischen Kontakt, angezeigt, um die erschmolzene Eiskugel unmittelbar nach dem Schließen des Formwerkzeugs entformen zu können und dadurch ein Nachschmelzen zu verhindern. Für das während des Schließvorgangs des Formwerkzeugs abfließende Schmelzwasser sind in der Teilungsfläche der Unterform 1 radiale, vom halbkugeligen Formraum 4 ausgehende Ablaufrinnen 11 vorgesehen, die insbesondere für eine gleichmäßige Schmelzwasserabfuhr unmittelbar vor dem Schließen des Formwerkzeugs sorgen.

Nach dem Abnehmen der Oberform 2 von der Unterform 1 kann die erschmolzene Eiskugel in der Unterform 1 von Hand aus gedreht werden, um einen allfälligen Umfangsgrat zu vermeiden. Die aus der Unterform 1 entnommene Eiskugel wird dann mit Hilfe eines flüssigkeitssaugenden Tuchs abgetrocknet, um ein Anfrieren des entlang der Kugeloberfläche abrinnenden, restlichen Schmelzwasserfilms und damit eine Beeinträchtigung der Form- und Maßhaltigkeit der Eiskugel zu unterbinden. Zur leichteren Entnahme der fertig erschmolzenen Eiskugel ist in der Unterform 1 ein Ausstoßer 12 vorgesehen, der über einen Nockentrieb 13 über eine Welle 14 betätigt werden kann, die mit Hilfe eines Handgriffs 15 gegen ein Rückstellmoment gedreht wird, das im därgestellten Ausführungsbeispiel durch eine vorgespannte Feder 16 erreicht wird. Mit dem Verdrehen des Handgriffs 15 wird der Ausstoßer 12 aus einer anschlagbegrenzten Ausgangsstellung in den Formraum 4 der Unterform 1 axial verschoben, sodass die Eiskugel aus dem Formraum 4 angehoben wird.

Die auf die geschilderte Art riss- und porenfrei hergestellten, maßhaltigen Eiskugeln können dann auf einer Dreipunktauflage bis zu ihrer weiteren Verwendung beispielsweise bei -20 °C gelagert werden.

## Patentansprüche

1. Verfahren zum Herstellen von Eiskugeln, wobei ein Eisblock aus gefrorenem Wasser in Würfel zersägt wird, bevor die Würfel in einem erwärmten Formwerkzeug mit halbkugeligen Formräumen (4) einer Unter- und einer Oberform (1, 2) während des Schließens der Unter- und Oberformen (1, 2) zu einer Kugel geschmolzen werden, **dadurch gekennzeichnet, dass** zunächst Wasser von unten nach oben zu einem Eisblock gefroren wird, dass die Würfel nach dem Sägen zum Ausgleich von Temperaturunterschieden während einer vorgegebenen Zeitspanne gekühlt werden, dass die Unter- und die Oberform (1, 2) während des Schließens gleichförmig erwärmt werden und dass die erschmolzene Eiskugel dem Formwerkzeug unmittelbar nach dem Schließen der Unter- und der Oberform (1, 2) entnommen und vom restlichen Schmelzwasserfilm befreit wird.

2. Verfahren nach Anspruch 1, **dadurch gekennzeichnet, dass** die Würfel vor dem Formschmelzen an der Oberfläche in einer wärmegedämmten Umgebung bei Raumtemperatur angetaut werden.

3. Verfahren nach Anspruch 1 oder 2, **dadurch gekennzeichnet, dass** die erschmolzenen Eiskugeln vor ihrer Entnahme aus der Unterform (1) in der Unterform (1) gedreht werden.

4. Vorrichtung zur Durchführung des Verfahrens nach einem der Ansprüche 1 bis 3 mit einem Formwerkzeug aus einer Unter- und einer Oberform (1, 2), die je einen halbkugeligen Formraum (4) bilden und mit einem Wärmeträger, vorzugsweise Wasser, beaufschlagbare Strömungskanäle (6) aufweisen, **dadurch gekennzeichnet, dass** die während des Schließvorgangs der Unter- und der Oberform (1, 2) mit dem Wärmeträger beaufschlagbaren Strömungskanäle (6) den jeweiligen Formraum (4) umschließen, dass die Unterform (1) in der Teilungsfläche zur Oberform (2) radiale, vom halbkugeligen Formraum (4) ausgehende Ablaufrinnen (11) für Schmelzwasser aufweist und dass das Formwerkzeug einen auf das Schließen der Unter- und der Oberform (1, 2) ansprechenden Signalgeber (10) aufweist.

## Claims

1. Method for producing ice balls, wherein an ice block of frozen water is sawn into cubes before the cubes are melted to form a ball in a heated moulding tool with hemispherical moulding chambers (4) of a lower mould and an upper mould (1, 2) during closure of the lower and upper moulds (1, 2), **characterised in that** first water is frozen from the bottom to the top to form an ice block, that the cubes are cooled for a preset period of time after sawing to even out temperature differences, that the lower and upper moulds (1, 2) are uniformly heated during closure and that the melted ice ball is removed from the moulding tool immediately after the lower and upper moulds (1, 2) are closed, and any residual melt water film is removed from it.

2. Method as claimed in claim 1, **characterised in that** the cubes are thawed at the surface in a thermally insulated environment at room temperature prior to the mould-melting process.

3. Method as claimed in claim 1 or 2, **characterised in that** the melted ice balls are turned in the lower mould (1) prior to removal from the lower mould (1).

4. Device for carrying out the method as claimed in any one of claims 1 to 3, having a moulding tool consisting of a lower mould and an upper mould (1,2) which each form a hemispherical moulding chamber (4) and comprise flow channels (6) which can be subjected to a heat transfer medium, preferably water, **characterised in that** during the process of closing the lower and upper moulds (1, 2), flow channels (6), which can be subjected to the heat transfer medium, surround the respective moulding chamber (4), that, in the jointing plane with respect to the upper mould (2), the lower mould (1) comprises radial run-out channels (11) issuing from the hemi-spherical moulding chamber (4) for melt water and that the moulding tool comprises a signal transmitter (10) which responds to the closure of the lower and upper moulds (1, 2).

## Revendications

1. Procédé de fabrication de boules de glace, un bloc de glace étant découpé en cubes à partir d'eau congelée, avant que les cubes soient fondus en une boule dans un moule chauffé avec des cavités (4) en forme de demi-sphère, une forme supérieure et une forme inférieure (1, 2), lors de la fermeture des formes supérieure et inférieure (1, 2), **caractérisé en ce que**, tout d'abord, l'eau est congelée du bas vers le haut en un bloc de glace, **en ce que** les cubes sont refroidis après la découpe pour compensation des différences de température pendant une période prédéfinie, **en ce que** les formes supérieure et inférieure (1, 2) sont chauffées de manière uniforme lors de la fermeture et **en ce que** la boule de glace fondue est retirée du moule immédiatement après la fermeture des formes supérieure et inférieure (1, 2) et est libérée du film d'eau fondue restant.

2. Procédé selon la revendication 1, **caractérisé en ce que** les cubes sont décongelés avant la fonte de la forme au niveau de la surface dans un environnement isolé thermiquement à température ambiante.

3. Procédé selon la revendication 1 ou 2, **caractérisé en ce que** les boules de glace fondues sont tournées avant leur retrait de la forme inférieure (1) dans la forme inférieure (1).

4. Dispositif pour réaliser le procédé selon l'une des revendications 1 à 3, avec un moule en une forme supérieure et une forme inférieure (1, 2) qui forment chacune une cavité (4) en forme de demi-sphère, et qui présentent des conduits d'écoulement (6) alimentés en un agent caloporteur, de préférence de l'eau, **caractérisé en ce que** les conduits d'écoulement (6) alimentés en agent caloporteur, enferment, pendant l'opération de fermeture des formes supérieure et inférieure (1, 2), la cavité (4) respective, **en ce que** la forme inférieure (1) présente dans la surface de séparation des goulottes d'écoulement (11) partant de la cavité (4) radiale en forme de demi-sphère, vers la forme supérieure (2), pour l'eau de fonte et **en ce que** le moule présente un émetteur de signaux (10) réagissant à la fermeture de la forme supérieure et une forme inférieure (1, 2).
